# EUROPEAN PATENT APPLICATION

(11) **EP 4 808 046 A1**
(43) Date of publication of application: **16.09.2026**
(21) Application number: 26163448.9
(22) Date of filing: 10.03.2026
(51) Int. Cl.: H04L 9/40, H04W 4/44, H04W 12/088

(54) **IN-VEHICLE COMMUNICATION DEVICE THAT PROCESSES PACKETS BASED ON ACL (ACCESS CONTROL LIST) AND UDF (USER DEFINED FIELD)**

(30) Priority: 12.03.2025 KR 20250032074
(71) Applicant: Telechips Inc., Seongnam-si, Gyeonggi-do 13453 (KR)
(72) Inventor: JEONG, Jae Yeop, Seongnam-si, Gyeonggi-do 13453 (KR); KIM, Dae Hwan, Seongnam-si, Gyeonggi-do 13453 (KR); HU, Ji Hun, Seongnam-si, Gyeonggi-do 13453 (KR)
(74) Representative: Jung, Minkyu

(57) **Abstract**

An in-vehicle communication device that processes packets based on an Access Control List (ACL) and a User Defined Field (UDF), comprising a CPU subsystem configured with a plurality of high-performance cores that are electrically isolated from each other, a communication interface including a plurality of Ethernet communication ports, and an Ethernet Packet Processing Engine (EPP) that performs a routing function between the plurality of Ethernet communication ports, wherein the Ethernet Packet Processing Engine (EPP) performs at least one of security inspection, filtering, forwarding, VLAN tagging, and mirroring of an input packet based on a plurality of ACL entry tables and a plurality of UDF entry tables.

## Description

### BACKGROUND

### TECHNICAL FIELD

The present disclosure relates to an Ethernet packet processing device, and more particularly, to a packet processing device based on ACL (Access Control List) and UDF (User Defined Field).

### Description of Related Technology

A TSN Packet Accelerator (TPA) embedded in an in-vehicle communication gateway device or an Electronic Control Unit (ECU) serves as a network interface such as Ethernet and CAN, and performs the role of processing input packets and delivering them safely and accurately to destinations within the vehicle.

The TPA may process packets based on ACL (Access Control List), and ACL filters packets based on fixed fields (MAC address, IP address, port number). This is suitable for relatively simple network traffic filtering, but is not suitable for complex network requirements and separate security requirements. That is, since non-standard data (such as parts of specific field values) cannot be inspected, the possibility of bypass attacks increases. In addition, specific bytes (protocol headers, checksums, etc.) may not be selectively matched. Furthermore, there are limitations in detecting header field tampering or spoofing.

To overcome such problems of filtering with ACL alone, UDF (User Defined Field) may be used in conjunction.

The UDF (User Defined Field)-based packet filtering method is a method that determines whether to mirror or forward a packet when a value at a specific offset position in the header portion from the entire packet, regardless of L2/L3/L4 distinction, matches a value designated in advance.

The UDF entry table is linked to data stored in the ACL entry table, and may assist the ACL entry table or additionally perform sophisticated packet matching operations.

The UDF entry table may store a specific key value in a designated area of a packet for the purpose of distinguishing/blocking undesignated packets for security purposes, and may use the key value for authentication.

To obtain the advantages described above, designers of in-vehicle communication gateway devices wish to use the UDF entry table; however, using the UDF entry table requires additional memory beyond the existing memory, and as a result, the size of the chip implementing the in-vehicle communication gateway device may increase.

### SUMMARY

Embodiments of the present disclosure may provide a memory structure in which an ACL entry table and a UDF entry table are implemented in a single memory area, thereby enabling the TPA to select at least one of the ACL entry table and the UDF entry table required for forwarding and mirroring operations on input packets.

However, the problems to be solved by the present disclosure are not limited thereto, and may be variously extended in an environment within a scope that does not depart from the spirit and scope of the present disclosure.

According to an embodiment of the present disclosure, an in-vehicle communication device that processes packets based on ACL (Access Control List) and UDF (User Defined Field) comprises: a CPU subsystem comprising a plurality of high-performance cores that are electrically isolated from each other; a communication interface comprising a plurality of Ethernet communication ports; and an Ethernet Packet Processing Engine (EPP) configured to perform a routing function between the plurality of Ethernet communication ports, wherein the Ethernet Packet Processing Engine (EPP) is configured to perform at least one of security inspection, filtering, forwarding, VLAN tagging, and mirroring of input packets based on a plurality of ACL (Access Control List) entry tables and a plurality of UDF (User Defined Field) entry tables.

The plurality of ACL (Access Control List) entry tables and the plurality of UDF (User Defined Field) entry tables may be configured to be included in a single memory.

The Ethernet Packet Processing Engine (EPP) includes an ACL processing unit and a UDF processing unit, the ACL processing unit and the UDF processing unit are configured in a parallel connection, and the ACL processing unit may compare Ethernet fields of the input packet with ACL conditions in the ACL (Access Control List) entry table to inspect compliance of the input packet with security rules, and forward the corresponding input packet to a packet action unit according to whether the security rules are complied with.

The UDF processing unit may extract field values of the input packet corresponding to at least one comparison position condition stored in the UDF entry table, compare the extracted field values with at least one UDF condition in the UDF entry table, and forward the corresponding input packet to the packet action unit.

The at least one comparison position condition includes at least one of Start of Frame (SoF), offset, and mask, and the at least one comparison position condition may be applied sequentially.

The packet action unit may drop the corresponding packet, or forward or mirror the corresponding packet to at least one of a specific VLAN or the plurality of Ethernet communication ports according to a processing result forwarded by the ACL processing unit and the UDF processing unit, wherein the processing result may include the input packet, whether the ACL condition is satisfied, whether the UDF condition is satisfied, an ACL action field, and a UDF action field.

The ACL entry table and the UDF entry table may include a field containing an activation state and setting information of the UDF condition.

The Ethernet Packet Processing Engine (EPP) may refer to the ACL entry table at an input port and add a specific value to an input packet containing a specific VLAN ID and transmit it to an output port, wherein the specific value may include an output port, a VLAN action, and a tag table number.

The Ethernet Packet Processing Engine (EPP) performs VLAN tagging on the input packet transmitted from the input port for each output port according to the specific value, and the VLAN tagging may select one of combinations of TPID (Tag Protocol Identifier) and VID (VLAN Identifier) to add or replace the input packet.

The Ethernet Packet Processing Engine (EPP) may select the VLAN ID and the TPID using the tag table number for each output port.

The Ethernet Packet Processing Engine (EPP) may perform both mirroring to a predetermined output port and the VLAN tagging of the input packet based on the ACL (Access Control List) entry table and the UDF (User Defined Field) entry table.

When the Ethernet Packet Processing Engine (EPP) performs the mirroring function of the input packet to the predetermined output port, the Ethernet Packet Processing Engine (EPP) may down-sample and mirror the input packet according to a predetermined interval time or a predetermined number of tokens.

The down-sampling method by the Ethernet Packet Processing Engine (EPP) may include: determining whether to apply the mirroring function to the input packet through ACL entry matching inspection; calculating an interval time if the ACL entry is interval down-sampling, or calculating the number of tokens if the ACL entry is token down-sampling; and repeatedly performing mirroring or drop operations according to the interval time or the number of tokens set for each ACL entry to generate a first or second output packet.

The present disclosure may have the following effects. However, this does not mean that a specific embodiment must include all of the following effects or only the following effects, and therefore, the scope of the present disclosure should not be understood as being limited thereby.

The packet processing system and method based on ACL (Access Control List) and UDF (User Defined Field) according to embodiments of the present disclosure may provide additional policy options even when using the same memory size as existing memory.

The packet processing system and method based on ACL (Access Control List) and UDF (User Defined Field) according to embodiments of the present disclosure may process a greater amount of data than the existing data throughput even with the same memory size as existing memory.

The packet processing system and method based on ACL (Access Control List) and UDF (User Defined Field) according to embodiments of the present disclosure may minimize security threats and block unnecessary data in high-volume network traffic situations.

The packet processing system and method based on ACL (Access Control List) and UDF (User Defined Field) according to embodiments of the present disclosure may provide fine-grained and robust conditional filtering and security in high-volume network traffic situations.

The packet processing system and method based on ACL (Access Control List) and UDF (User Defined Field) according to embodiments of the present disclosure may deliver traffic seamlessly even in multi-VLAN environments.

### BRIEF DESCRIPTION OF THE DRAWINGS

FIG. 1 is a block diagram illustrating a detailed internal configuration of a central control unit in a vehicle, according to an embodiment of the present disclosure.
FIG. 2 is an internal block diagram of an Ethernet Packet Processing Engine (EPP) that controls the path of Ethernet packets in a vehicle, according to an embodiment of the present disclosure.
FIG. 3 is a functional block diagram of packet filtering using UDF (User Defined Field) of the Ethernet Packet Processing Engine (EPP), according to an embodiment of the present disclosure.
FIGS. 4a and 4b are diagrams illustrating the structures of an ACL entry table and a UDF entry table, respectively, according to an embodiment of the present disclosure.
FIG. 5 is a diagram illustrating a plurality of ACL entry tables and UDF entry tables implemented in a single memory, according to an embodiment of the present disclosure.
FIGS. 6a and 6b are diagrams illustrating a VLAN tagging method for each of multiple ports, according to another embodiment of the present disclosure.
FIG. 7 is a diagram illustrating a method for performing a mirroring function with down-sampling of the Ethernet Packet Processing Engine (EPP), according to yet another embodiment of the present disclosure.

### DETAILED DESCRIPTION OF EXAMPLE EMBODIMENTS OF THE INVENTION

The present disclosure may have various modifications and may have various embodiments, and specific embodiments are illustrated in the drawings and described in detail in the detailed description. However, this is not intended to limit the present disclosure to specific embodiments, and it should be understood that all modifications, equivalents, and substitutes included in the spirit and technical scope of the present disclosure are included. In describing the present disclosure, detailed descriptions of related known technologies are omitted when it is determined that they may obscure the gist of the present disclosure.

Terms such as first, second, etc. may be used to describe various components, but the components are not limited by the terms. The terms are used only for the purpose of distinguishing one component from another component.

The terms used in the present disclosure are used only to describe specific embodiments and are not intended to limit the present disclosure. The terms used in the present disclosure are selected from general terms that are currently widely used while considering the functions in the present disclosure, but may vary depending on the intention of a person skilled in the art, precedents, or the emergence of new technologies. In addition, in certain cases, there are terms arbitrarily selected by the applicant, and in such cases, the meanings thereof will be described in detail in the corresponding description of the disclosure. Therefore, the terms used in the present disclosure should be defined based on the meanings of the terms and the overall content of the present disclosure, rather than the simple names of the terms.

Singular expressions may include plural expressions unless the context clearly indicates otherwise. In the present disclosure, terms such as "comprise" or "have" are intended to designate the presence of features, numbers, steps, operations, components, parts, or combinations thereof described in the specification, and should be understood as not precluding the possibility of the presence or addition of one or more other features, numbers, steps, operations, components, parts, or combinations thereof.

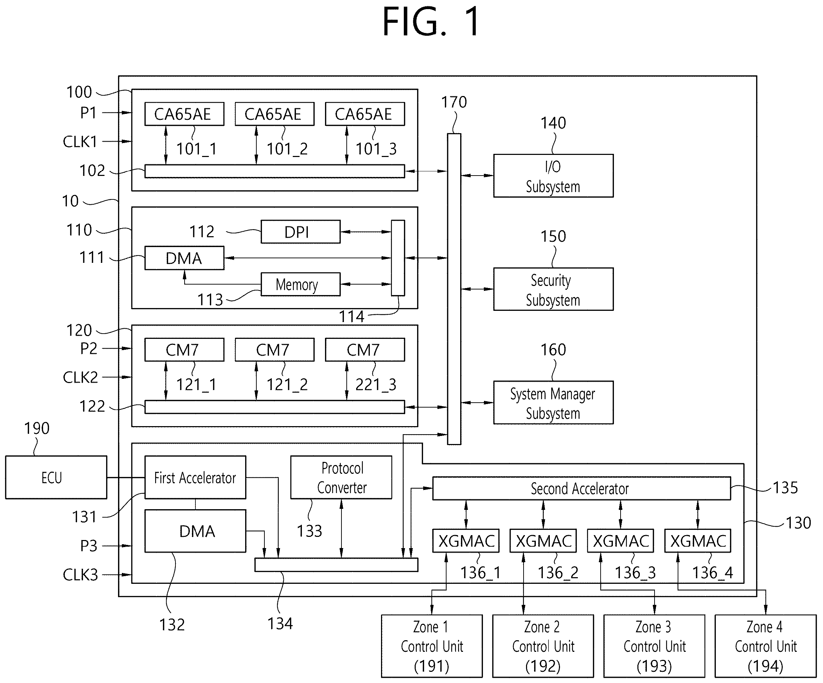

FIG. 1 is a block diagram illustrating a detailed internal configuration of a central control unit in a vehicle, according to an embodiment of the present disclosure.

As illustrated in FIG. 1, the central control unit (10) according to an embodiment of the present disclosure may broadly include a CPU subsystem (100), a memory subsystem (110), an MCU subsystem (120), a network subsystem (130), an I/O subsystem (140), and a main NoC bus system (170).

The central control unit (10) is connected to at least two zone control units (191, 192, 193, 194) via a TSN-based backbone network, and may also be connected to a plurality of domain controllers (not illustrated) and auxiliary driving devices (not illustrated).

The CPU subsystem (100) may include three high-performance cores (101_1, 101_2, 101_3) (e.g., Arm Cortex-65AE) that are physically isolated in a hypervisorless structure, and each of the three high-performance cores may independently manage multiple domains of the vehicle (chassis, body, and powertrain domains) and may operate as an application processor. In addition, the CPU subsystem (100) includes an interrupt controller and a clock generation and monitoring unit to manage interrupts from peripheral devices within the system, and may generate and monitor clocks required for all modules of the system.

The MCU subsystem (220) may include a plurality of cores (121_1, 121_2, 121_3), and a master register (not illustrated) stores and manages various device control command data generated in the MCU subsystem (120), controls specific functions through event-based register mirroring, and may process interrupts by checking system errors. In addition, one of the plurality of cores (121_1, 121_2, 121_3) processes real-time data, while another core is responsible for monitoring the system state or detecting errors, manages the overall control flow of the system, and may record the error when an error occurs and execute a response command as needed.

The memory subsystem (110) manages data transfer between computation devices and peripheral devices in conjunction with the main NoC bus system (170) and may be responsible for memory access. Here, the memory (113) may include external DDR (Double Data Rate) memory and external Serial-NOR flash memory.

The NoC bus system (170) is a switched fabric in which any master device is connected to any slave device and a plurality of master devices may be simultaneously connected to a plurality of slave devices.

In addition, the DMA controller (111) supports efficient data transfer between the memory (113) and peripheral devices, and the Deep Packet Inspection (DPI) engine (112) may deeply analyze data packets transmitted through the vehicle network to identify malicious attacks from outside.

The security subsystem (150) may include a security processor equipped with dedicated memory, encryption, a random number generator, and other peripheral devices. Once secure booting is completed, devices external to the security subsystem

(150), including the security processor, cannot directly access or control most hardware blocks inside the security subsystem (150). The security subsystem (150) may communicate with other computation devices through a mailbox.

The network subsystem (130) may receive a package containing data, convert it to a specific format, and perform a process of creating a new package configured by adding additional information or copying existing information.

The network subsystem (130) may include a first accelerator (131), a second accelerator (135), a protocol converter (133), and a NoC sub bus system (134).

The first accelerator (131) may perform legacy communication conversion between Electronic Control Units (ECUs) (190) on a hardware basis, that is, CAN-CAN conversion, CAN-LIN conversion, and LIN-LIN conversion, and may have a plurality of CAN/CAN-FD/LIN controllers, a Legacy Packet Processing Engine (LPP engine), and a dedicated DMA controller.

The second accelerator (135) may perform a routing function between Ethernet ports on a hardware basis, and has multi-gigabit Ethernet communication interfaces (e.g., USXGMII, SGMII, RGMII), a plurality of Gigabit Media Access Controllers (XGMAC, 136_1 to 136_4), and an Ethernet Packet Processing Engine (EPP), and complies with the IEEE TSN/AVB standard and the IEEE 1599-time stamp standard, and may perform MAC security and IPsec security on input packets.

The EPP engine performs the role of a multi-port IEEE 802.3 Gigabit Ethernet switch/router, controls data flow through hardware packet classification, scheduling, and shaping, and may interpret Ethernet packets received through Ethernet ports on a software basis or hardware basis and switch them to the Ethernet port at which the target node is located.

The EPP engine performs internal packet scheduling when there is congestion of traffic inside the central control unit (10) or when a certain schedule is required, and may determine the drop of input packets when the internal buffer has insufficient capacity for communication.

The EPP engine may include a hardware-based classifier, and the hardware-based classifier may rapidly disassemble the internal structure of a packet when the packet arrives and compare the header and payload against predefined rules. Specifically, the type and destination of an input packet may be determined through specific conditions (e.g., if statements, gate operations, parallel operations). That is, using a lookup table, items matching the attributes of the packet may be identified, and forwarding or drop actions may be promptly determined.

The EPP engine may use a MAC HASH table as a lookup table for L2 switching, and may determine port forwarding of packets using a MAC address (corresponding to an in-vehicle device) and a VLAN ID (an ID grouping MAC addresses).

The MAC HASH table is divided into a general area and a collision area, and the collision area may be a space prepared for overflow of the general area. For example, when an A address and a B address are received, a collision may occur, and the collision space may be used to prevent such a collision. That is, if address A is matched to packet No. 1, a structure may be provided in which a pointer stating "if there is no match, refer to the collision space" is written in packet No. 1.

However, it may be difficult to find, one by one, which entry of the table contains the MAC address and what contents are included when a MAC address is received using a hash algorithm. Therefore, a hash value is generated using a specific algorithm with the MAC address and VLAN ID, the hash value is used as an address, and entries may be found based on the address. The contents to be looked up are stored in 188-bit memory, and the contents of the 188-bit memory may include table size adjustment, access information, and action entries.

The contents of the action entry field may include action contents for determining whether to discard the input packet, to which Ethernet port to forward it, to which scheduler to route the traffic, to which traffic control side to pass it, or if it is a new packet, to PUNT (send up) to the CPU side, and for packets that require overlapping processing, searching through multiple tables and overriding.

The lookup table may include a plurality of tables including a MAC address table, a routing table, and an ACL (Access Control List) table, and action matching may be determined by priority among the plurality of tables, thereby determining forwarding or routing.

The first priority is the ACL (Access Control List) table, and if the input packet matches the contents stored in the ACL, the determined action of the ACL table may be performed. The second priority is to determine whether the input packet has been processed with IPsec, and if so, a decryption action may be performed. The third priority is to process data forwarded from the host CPU. Thereafter, for streams, DDoS attack blocking, erroneous packets, or packets not in the MAC address table, processing for PUNTing to the host CPU may be performed.

Finally, matching items may be found based on rules set in hardware through the MAC HASH table, and forwarding actions may be determined.

In addition, a field for determining whether to operate a specific MAC address statically or dynamically may also be included.

The protocol converter (133) may be responsible for conversion and forwarding between heterogeneous packet formats, and may be implemented and executed as a processor that operates on a software basis. That is, the protocol converter (133) may perform at least one of protocol conversion between Ethernet and CAN, and protocol conversion between Ethernet and LIN.

A CAN message converted to an Ethernet packet through the protocol converter (133) may be forwarded to the Ethernet port containing the destination node of the CAN message through the EPP engine. In addition, an Ethernet packet forwarded through the EPP engine may be converted to a CAN message through the protocol converter (133) and transmitted to the CAN port at which the target node is located by the LPP engine.

The network subsystem (130) may automatically route certain types of frames.

The network subsystem (130) further includes a parsing unit (not illustrated), and the parsing unit may extract data in specific fields from specific types of frames.

A package includes a protocol-dependent address and a payload, and the format of the address and the method of using the address vary depending on the communication protocol. For example, Ethernet uses a 48-bit Media Access Control (MAC) address to identify a target node used for unicast or multicast packets, and CAN uses an 11-bit or 29-bit message identifier to identify message content used for multicast. FlexRay uses temporal relationships to identify message content used for multicasting messages.

The I/O subsystem (140) includes an external device controller and may provide a connection between the network subsystem (130) and external devices. Here, the external device controller may include eMMC, USB 2.0 devices, Ethernet MAC, and the like. The I/O subsystem (140) may include SPI (Serial Peripheral Interface), I2C, PDM (Pulse Density Modulation), UART, CAN communication controllers, and ADC.

The central control unit (10) may include a port capable of receiving an actuator driving signal transmitted from a zone control unit (191, 192, 193, 194) or an Electronic Control Unit (ECU) (190), and when the actuator driving signal received through the port includes a predetermined signal pattern corresponding to an actuator connected thereto, the central control unit (10) may have a path for bypassing the actuator driving signal and transmitting it to the actuator connected thereto.

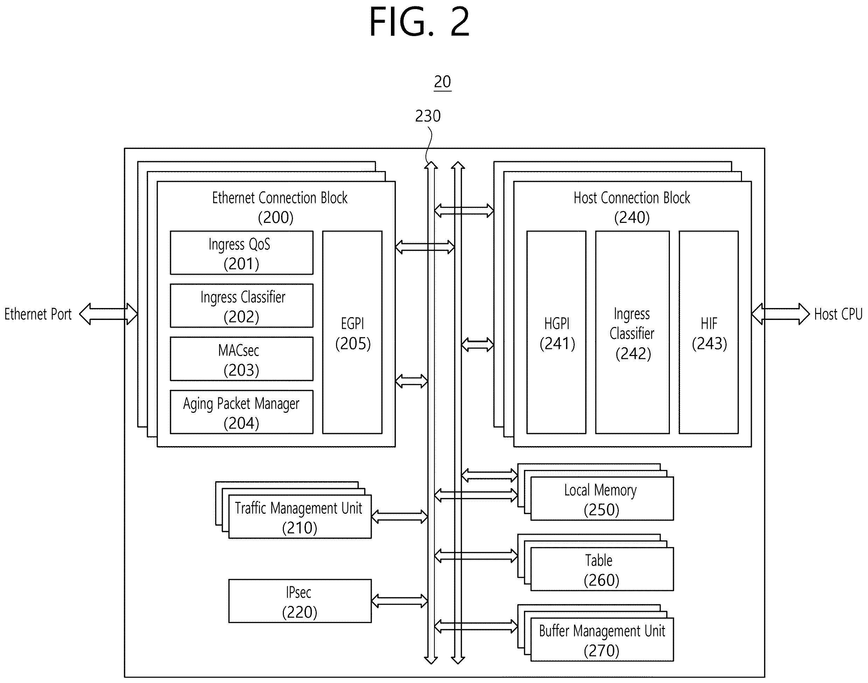

FIG. 2 is an internal block diagram of an Ethernet Packet Processing Engine (EPP) that controls the path of Ethernet packets in a vehicle, according to an embodiment of the present disclosure.

The Ethernet Packet Processing Engine (EPP) (20) of the present disclosure is a hardware-based engine that is embedded in an in-vehicle gateway device or an Electronic Control Unit (ECU) and controls the path of Ethernet packets.

As illustrated in FIG. 2, the Ethernet Packet Processing Engine (EPP) (20) may include an Ethernet connection block (200), a traffic management unit (210), IPsec (220), a system bus (230), a host connection block (240), a local memory (250), a table (260), and a buffer management unit (270).

The Ethernet Packet Processing Engine (EPP) (20) may support four Ethernet ports (2x 1G, 1x 2.5G, 1x 5G) and one Host port (10G).

The ingress QoS (201) within the Ethernet connection block (200) may include a plurality of functions for internal scheduling and traffic congestion control through QoS (Quality of Service) functionality.

The ingress classifier (202) includes a function for distinguishing between registered packets and unregistered packets (including new packets) through reliability checking of input packets on a hardware basis, and determining an appropriate processing method.

The aging packet manager (204) may include hardware-based logic and performs a function of converting a specific logic state for packets meeting specific conditions within a predetermined time interval. For example, it converts a '1' state to a '0' state. The aging packet manager (204) performs the specific logic state conversion function when an entry input to the Ethernet Packet Processing Engine (EPP) (20) meets a predetermined condition. For example, the predetermined condition may include a case in which the fresh bit of the input entry is '1' and the entry has a history of being input in a period before a specific time.

MACsec (applied to L2 switching) and IPsec (applied to L3/L4 routing) may enhance network security through encryption.

The Ethernet connection block (200) performs MAC address and VLAN ID filtering through a plurality of lookup tables stored in the table (260), thereby determining whether to receive the input packet and the Ethernet port to which to transmit it, and may support additional fine-grained processing of received input packets using ACL (Access Control List) and UDF (User Defined Field).

The host connection block (240) may perform packet forwarding between the host CPU or external IP and the Ethernet connection block (200).

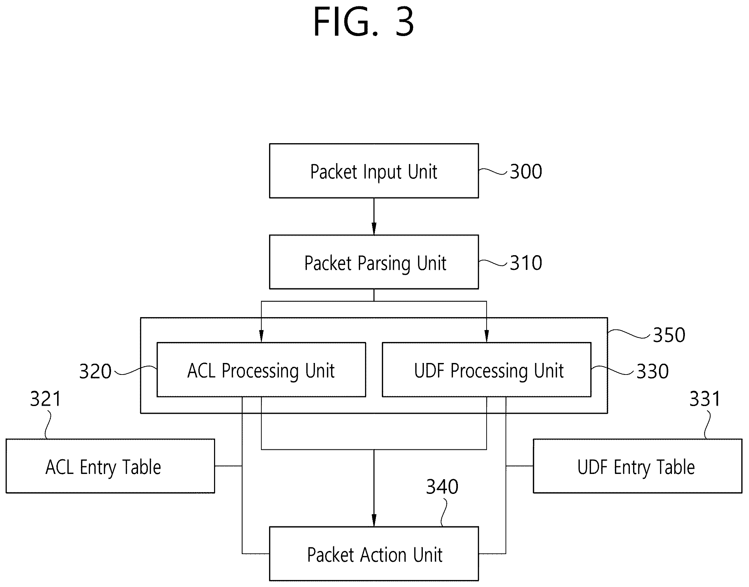

FIG. 3 is a functional block diagram of packet filtering using UDF (User Defined Field) of the Ethernet Packet Processing Engine (EPP) (20), according to an embodiment of the present disclosure.

The functional block diagram illustrated in FIG. 3 schematically illustrates the packet processing performed by each component of the Ethernet Packet Processing Engine (EPP) (20) of FIG. 2 in a step-by-step manner.

The Ethernet Packet Processing Engine (EPP) (20) may sequentially process input packets through the functional block diagram of FIG. 3.

When a packet first enters the Ethernet Packet Processing Engine (EPP) (20), the packet input unit (300) receives the packet and stores it in an internal buffer.

The packet input unit (300) includes an Ethernet interface and establishes a physical data link between the vehicle network and the Ethernet Packet Processing Engine (EPP) (20).

Thereafter, the packet parsing unit (310) operates to extract key header fields such as source/destination MAC, Ethernet type, and VLAN ID from the input packet. For example, header information such as 'Dst MAC = 00:11:22:33:44:55', 'Src MAC = 66:77:88:99:AA:BB', and 'EtherType = 0x0800' is extracted.

The packet processing unit (350) includes an ACL processing unit (320) and a UDF processing unit (330), the packet processing unit (350) includes a pre-generated ACL entry table (321) and a UDF entry table (331), and may further include entry priorities designated by a user.

The packet processing unit (350) may determine drop, forwarding, and mirroring of the corresponding input packet according to the action field of the corresponding entry, when the header information extracted by the packet parsing unit (310) matches an entry designated by the user according to the entry priorities designated by the user.

The ACL (Access Control List) processing unit (320) compares the Ethernet fields of the input packet with ACL conditions based on the ACL entry table (321). That is, the ACL processing unit (320) compares the Ethernet fields of the input packet with predefined rules in the ACL entry table (321) to inspect whether the input packet satisfies security rules.

The ACL entry table (321) may have ACL conditions such as 'Destination MAC = 00:11:22:33:44:55' and 'EtherType = 0x0800', and when the fields of the input packet satisfy the corresponding ACL conditions, the ACL processing unit (320) forwards the input packet, ACL condition matching result, and ACL action field to the packet action unit (340).

The UDF processing unit (330) may perform additional detailed matching operations on the input packet.

The UDF processing unit (330) may perform matching up to non-standard fields of internal data of the input packet using Start of Frame (SoF), offset, mask, and UDF contents stored in the UDF entry table (331).

The UDF processing unit (330) has at least one comparison position condition and at least one UDF condition (e.g., UDF contents) stored in the UDF entry table

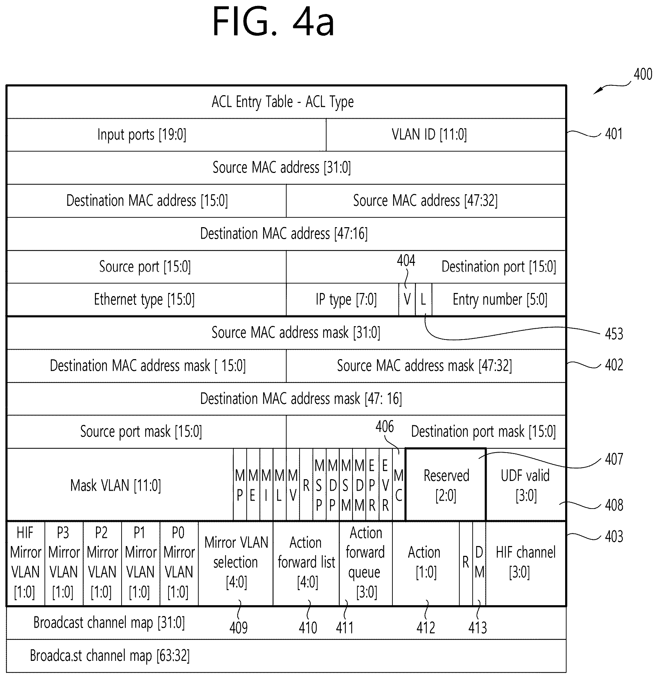

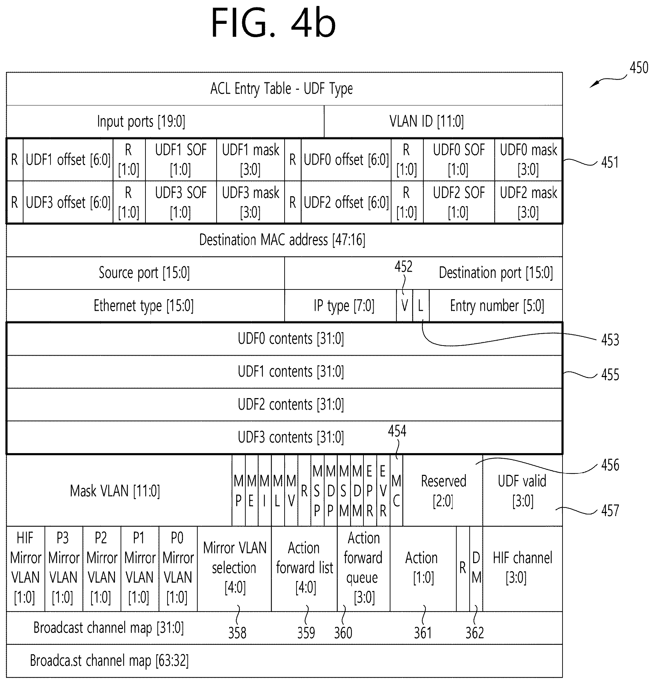

(331). For example, the comparison position condition may include Start of Frame (SoF), offset, mask, and the like, and the UDF condition may be stored in advance for each entry (455 of FIGs. 4a and 4b).

The UDF processing unit (330) may sequentially use at least one comparison position condition to extract a specific position value from the input packet and inspect whether the extracted specific position value matches at least one UDF condition (UDF contents (455) of FIG. 4b).

For example, if Start of Frame (SoF) is set to '01' as a first comparison position condition, this refers to the starting point of the L3 header, that is, after the Ethernet type field. For example, if the offset is set to 0x7 as a second comparison position condition, a position 7 bytes away from the L3 header is inspected. This position corresponds to the protocol field (e.g., TCP/UDP) and specific bytes of the header checksum of IPv4. For example, if mask = '0011' is set as a third comparison condition, it corresponds to the upper 2 bytes. Finally, if the field value of the input packet extracted by the sequential execution of the first to third comparison position conditions matches the UDF condition, the UDF processing unit (330) forwards the input packet, UDF condition matching result, and UDF action field to the packet action unit (340).

The packet action unit (340) merges the processing results forwarded by the ACL processing unit (320) and the UDF processing unit. The processing results may include the input packet, ACL condition matching result, UDF condition matching result, ACL action field, and UDF action field.

The packet action unit (340) determines a specific action for the input packet using the merged processing results. For example, when the merged processing results indicate that the input packet matches both the ACL condition and the UDF condition, a forward operation is performed on the corresponding packet. Conversely, when the input packet does not match both the ACL condition and the UDF condition, the corresponding packet is discarded.

The packet action unit (340) executes the operation defined in at least one of the action fields stored in the ACL entry table and the UDF entry table for the input packet that has passed both the ACL condition and the UDF condition. In the case of a forward operation, the packet action unit (340) may forward the input packet to at least one of a specific VLAN or the Ethernet ports of FIG. 1, or may also perform drop or redirect operations according to security requirements.

FIGS. 4a and 4b are diagrams illustrating the structures of the ACL entry table and the UDF entry table, respectively, according to an embodiment of the present disclosure.

A first area (401) of a first entry of the ACL entry table (400) of FIG. 4a may include an input port, VLAN ID, source MAC, destination MAC, destination port, Ethernet type, IP type, and entry valid bit (404) of the input packet.

A second area (402) of the first entry may include a source MAC mask, a destination MAC mask, an input port mask, a destination port mask, a VLAN mask ID, a reserve field (407), and a UDF valid field (408).

A third area (403) of the first entry may include a VLAN mirroring selection bit (409) for the packet, an action forward list (410), an action forward queue (411), an action (412), and a DM field (413).

The reserve fields (407, 456) and UDF valid bits (408, 457) of FIGS. 4a and 4b are areas for linking the ACL entry table (400) and the UDF entry table (450), and include the activation state and setting information of the UDF corresponding to each entry.

UDF fields may be configured by matching specific position data of the input packet according to the SoF, offset, and mask settings of the UDF index (451) of FIG. 4b.

The SoF (Start of Frame) of the UDF index (451) refers to the reference position of the packet data at which inspection is to begin, and may have three setting values.
1) '00' or '11': Start point of the frame (DMAC position)
   - Starting from the destination MAC (DMAC[47:40]), which is the foremost part of the Ethernet frame
2) '01': Point after the Ethernet type (L3 header start)
   - Starting position of the L3 header (e.g., IPv4/IPv6 header) following the Ethernet header
3) '10': Point after the IP destination address (L4 start)
   - The L4 header portion (e.g., TCP/UDP, etc.) following the L3 header. This value is valid only when L3 is an IP packet.

The offset of the UDF index (451) specifies the position of the input packet field for comparison with the UDF contents (455), designating how many bytes away from the SoF reference point the data is to be inspected. The offset may be set with 7 bits, and a maximum offset of 127 bytes may be specified.

The mask of the UDF index (451) uses a byte mask to compare only specific bytes between the UDF contents (355) and the input packet field, thereby eliminating unnecessary operations. That is, it refers to a mask of [3] = [31:24], [2] = [23:16], [1] = [15:8], [0] = [7:0].

The UDF contents (455) may specify the condition values that specific field values of the input packet must match.

That is, by utilizing SoF, offset, and mask to selectively match specific data fields within the packet, and by inspecting whether the data of the packet matches the values defined in the UDF contents (455), specific packets may be filtered or the corresponding policy may be executed.

The UDF valid bits (408, 457) may store the activation state of each of the UDF contents (455).

When the MC field (406, 454) is a specific bit (e.g., '1'), both the ACL condition and the UDF condition must be matched for the corresponding entry, and when it is '0', an action (e.g., forward, drop, etc.) is triggered when one of the ACL condition and the UDF condition is satisfied. The action contents may include drop, forward, and the like.

The Ethernet Packet Processing Engine (EPP) (20) may provide a network function designed to replicate the input packet and output it to a designated output port when the input packet matches a predetermined condition in association with the ACL entry table (400).

The action field (412, 461) may include '00' for drop, '01' for port forward, '10' for port forward including queue setting, and '11' for default action (e.g., "Do Nothing"). For example, when the action field (412, 461) is set to "Do Nothing", the Ethernet Packet Processing Engine (EPP) (20) may mirror the input packet for reporting and debugging purposes and forward it to a designated port. This operation does not actually modify or drop the packet, and may copy the input packet matched to the conditions stored in the ACL entry table as-is and forward it to the output port.

The action forward list field (410) among the action entries of the ACL entry table (400) designates the activation of a specific port among the EMAC or host ports, such as bit '0' for activating port 0, bit '1' for activating port 1, bit '2' for activating port 2, and the like. For example, '0x1' designates forwarding the input packet to port 0, and '0x3' designates forwarding the input packet to port 0 and port 1.

When the input packet is matched to the ACL entry table (400) or the UDF entry table (450) and the action field (412, 461) of the matched entry is set to '11', the input packet may be forwarded to the mirroring target port by referring to the bit map of the forward list field (410, 459).

In addition, even when the input packet is a packet for which drop has been determined by the MAC table, routing table, or the like, if the DM field (413, 462) is activated (e.g., '1' state), the input packet may be forwarded to the mirroring target port by referring to the bit map of the forward list field (410, 459).

Through this, the Ethernet Packet Processing Engine (EPP) (20) of the present disclosure may support the capture of packets blocked for security purposes for analysis and debugging purposes. As such, various services such as network debugging, traffic monitoring, and specific traffic analysis may be provided through various output port settings (bit map).

The VLAN tagging structure of packets is defined by the IEEE 802.1Q standard and includes a VLAN Identifier (VID) and a TPID (Tag Protocol Identifier).

The Ethernet Packet Processing Engine (EPP) (20) may provide a function of manipulating VLANs (e.g., add/delete/replace) together with the mirroring function for input packets.

The mirroring VLAN may perform the replace/delete function only when the first VLAN tagging has a TPID of 8100.

In addition, the VLAN operation may be independently configured for each output port.

In addition, the Ethernet Packet Processing Engine (EPP) (20) may generally perform traffic segmentation through port-based VLAN settings.

However, the Ethernet Packet Processing Engine (EPP) (20) according to an embodiment of the present disclosure performs VLAN tagging (add/replace) by selecting one of 16 TPID (Tag Protocol Identifier) + VID (VLAN Identifier) combinations predefined in a CSR (Control/Status Register) for each output port, regardless of port-based VLAN settings, and may determine the VLAN at the output port using the VLAN tagging designated at the input port.

Here, the TPID is a field indicating the type of the VLAN tag. Through this, data traffic is restructured to meet the requirements of a specific VLAN, and the VLAN tagging operation may be customized by varying the detailed settings for each port.

As such, the Ethernet Packet Processing Engine (EPP) (20) of the present disclosure may perform the mirroring function together with the VLAN tagging (add/replace) operation.

The VLAN operation of the output port may be determined through the action field of the matched entry by querying the ACL entry table (400) at the input port, and the VLAN table of the output port may be selected.

Detailed information related to the packet, including which input port the packet entered through, VLAN, MAC address, IP address, protocol type, and QoS fields, may be used for determining operations such as ACL, VLAN processing, QoS, and mirroring.

Each output port may output by tagging (add/replace) the TPID + VID combination selected at the input port from among the 16 TPID + VID combinations set in the CSR.

The Ethernet Packet Processing Engine (EPP) (20) of the present disclosure may independently configure the VLAN processing operation for each output port. In addition, it is suitable for VLAN expansion, rebranding, and fine-grained traffic management in actual network environments. Furthermore, when processing VLAN tags at each output port, integrated management is possible through reference to the tag table for each output port, and a specific VLAN ID and TPID may be dynamically selected through the tag table number. Through this, tag rules among output ports may be unified, and isolation and distribution of specific VLAN traffic are possible.

In addition, traffic may be delivered seamlessly even in multi-VLAN environments. For example, traffic of port A is tagged as VLAN 10, traffic of port B is tagged as VLAN 20, and in specific traffic patterns, the tagging may be replaced to change the traffic flow.

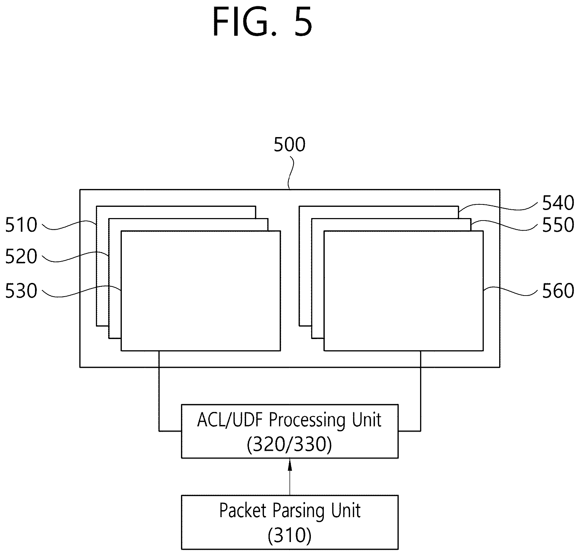

FIG. 5 is a diagram illustrating a plurality of ACL entry tables and UDF entry tables implemented in a single memory, according to an embodiment of the present disclosure.

As illustrated in FIG. 5, a plurality of ACL entry tables (510, 520, 530) and UDF entry tables (540, 550, 560) may be implemented in a single memory (500).

Each of the ACL processing unit (320) and the UDF processing unit (330) of FIG. 3 may filter the input packet or forward it to the destination port using the information forwarded from the packet parsing unit (310) and each of the plurality of ACL entry tables (510, 520, 530) and UDF entry tables (540, 550, 560) implemented in the single memory (500).

By configuring the plurality of ACL entry tables (510, 520, 530) and the plurality of UDF entry tables (540, 550, 560) in the single memory (500), space may be used more efficiently. That is, since the items of the ACL entry table and the UDF entry table are shared in the same memory space, space may be used more efficiently.

In addition, the ACL entry table (400) and the UDF entry table (450) may have overlapping data, and in the integrated memory structure, overlapping data may be eliminated by referencing the same area. For example, UDF-related information may be directly combined with ACL fields using the reserve field.

In addition, integrating into a single memory enables management of ACL and UDF data within the same address space, thereby minimizing the area by not additionally generating memory.

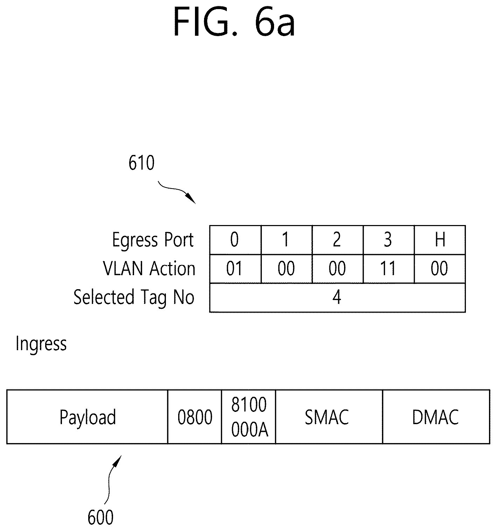

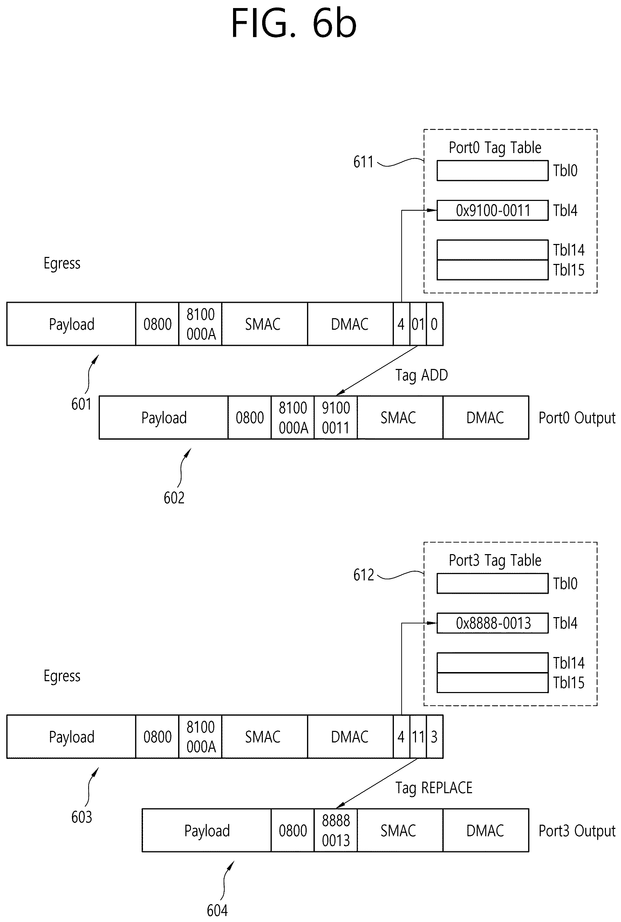

FIGS. 6a and 6b are diagrams illustrating a VLAN tagging method for each of multiple ports, according to another embodiment of the present disclosure.

Referring to FIGS. 6a and 6b, an input packet (600) is input to the Ethernet Packet Processing Engine (EPP) (20) of FIG. 2. Here, as an example, the VLAN ID may be 10 (0x00A).

A first table (610) shows the VLAN action and tag table number preset for each output port for packets having a VLAN ID of 10, by referring to the ACL entry table.

A second table (611) stores the VLAN ID to be added or replaced at output port '0' for each tag table number.

A third table (612) stores the VLAN ID to be added or replaced at output port '3' for each tag table number.

The Ethernet Packet Processing Engine (EPP) (20) refers to the first table (610) and adds the output port, VLAN action bit, and tag table number to the input packet (600) for forwarding.

For the packet (601) forwarded to output port '0', output port '0', VLAN action '01', and tag table number '4' are added. For the packet (603) forwarded to output port '3', output port '3', VLAN action '11', and tag table number '4' are added for forwarding.

At output port '0', the TPID + VID (9100-0011) stored in table No. '4' within the second table (611) is retrieved and added after the VLAN ID (8100000A) of the input packet (600) (see output packet 602).

In addition, the Ethernet Packet Processing Engine (EPP) (20) refers to the first table (610) and, for the input packet (600), retrieves the TPID + VID (8888-0013) stored in table No. '4' of the tag table (612) of output port '3' at output port '3', and replaces the VLAN ID (8100000A) of the input packet (600) with '8888-0013' (see output packet 604).

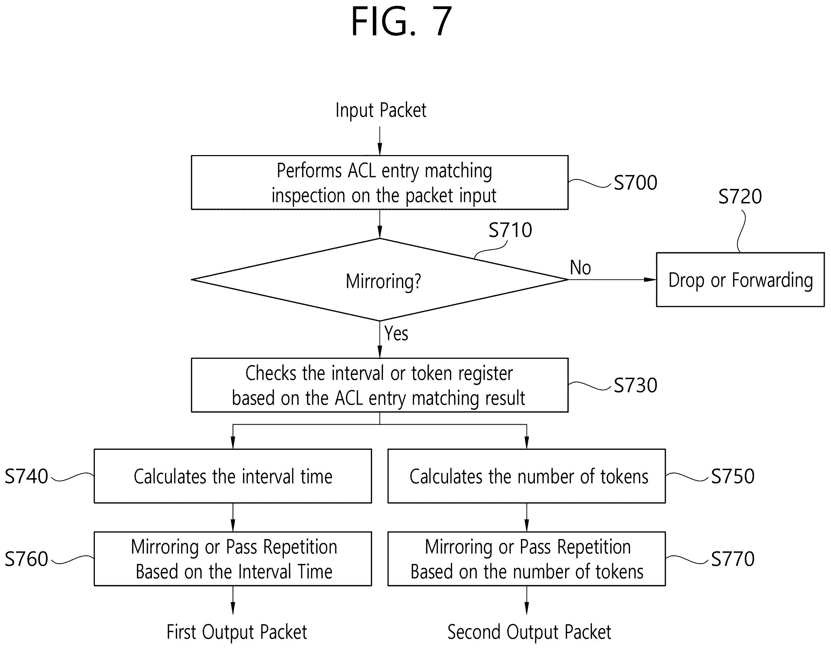

FIG. 7 is a diagram illustrating a method for performing a mirroring function with down-sampling of the Ethernet Packet Processing Engine (EPP) (20), according to yet another embodiment of the present disclosure.

As yet another embodiment of the present disclosure, the Ethernet Packet Processing Engine (EPP) (20) of the present disclosure may provide a down-sampling function based on interval time intervals and a down-sampling function based on the number of tokens when the matched entry for each output port performs the mirroring function.

If all packets matched to a specific ACL entry table are unconditionally processed, or if the entirety of packets is processed, traffic overload may be caused. Alternatively, when mirroring packets that meet specific conditions (e.g., monitoring packets), the receiving unit responsible for monitoring may not wish to receive all mirrored packets.

To solve such problems, a down-sampling operation may be performed based on a specific interval or a specific number of packets (tokens) during traffic control, thereby forwarding one mirrored packet at each interval or forwarding one mirrored packet at each specific number of tokens.

First, the Ethernet Packet Processing Engine (EPP) (20) performs ACL entry matching inspection on the packet input through the input port (S700).

Based on the ACL entry matching result, it is determined whether to apply the mirroring function to the input packet (S710).

If mirroring is to be applied, the setting of the interval or token register of the matched ACL entry is checked (S730).

Thereafter, if the interval or token register value of the matched ACL entry indicates interval down-sampling, the interval time is calculated (S740), and if it indicates token down-sampling, the number of tokens is calculated (S750).

Thereafter, according to the interval time or the number of tokens set for each ACL entry, mirroring or drop operations are repeatedly performed on packets matched to the ACL entry to generate a first or second output packet (S760, S770).

The interval time or the number of tokens for each ACL entry may be set through a down-sampling access register and a down-sampling target register.

For example, by setting the down-sampling target register to an interval value write and the down-sampling access register to '0xB00', interval mirroring for the first ACL entry may be configured. That is, the interval value is stored in the down-sampling target register, and '0xB00' is written to the down-sampling access register to activate the hardware setting. One tick of the interval counter is calculated as 2 ns (500 MHz clock base), and the interval is basically set as the interval value x 2 ns when calculating the interval time. The hardware may begin operation based on the interval time calculated from the input interval value.

## Claims

1. An in-vehicle communication device that processes packets based on ACL (Access Control List) and UDF (User Defined Field), comprising:
a CPU subsystem having a plurality of high-performance cores that are electrically isolated from each other;
a communication interface having a plurality of Ethernet communication ports; and
an Ethernet Packet Processing Engine (EPP) configured to perform a routing function between the plurality of Ethernet communication ports,
wherein the Ethernet Packet Processing Engine (EPP) is configured to perform at least one of security inspection, filtering, forwarding, VLAN tagging, and mirroring of an input packet based on a plurality of ACL (Access Control List) entry tables and a plurality of UDF (User Defined Field) entry tables.

2. The in-vehicle communication device of claim 1, wherein the plurality of ACL (Access Control List) entry tables and the plurality of UDF (User Defined Field) entry tables are configured to be included in a single memory.

3. The in-vehicle communication device of claim 1 or 2, wherein the Ethernet Packet Processing Engine (EPP) includes an ACL processing unit and a UDF processing unit, the ACL processing unit and the UDF processing unit are configured in a parallel connection, and the ACL processing unit compares Ethernet fields of the input packet with ACL conditions in an ACL (Access Control List) entry table to inspect compliance of the input packet with security rules, and forwards the corresponding input packet to a packet action unit according to whether the security rules are complied with.

4. The in-vehicle communication device of claim 3, wherein the UDF processing unit extracts field values of the input packet corresponding to at least one comparison position condition stored in a UDF entry table, compares the extracted field values with at least one UDF condition in the UDF entry table, and forwards the corresponding input packet to the packet action unit.

5. The in-vehicle communication device of claim 4, wherein the at least one comparison position condition includes at least one of SoF (Start of Frame), offset, and mask, and the at least one comparison position condition is applied sequentially.

6. The in-vehicle communication device of any one of claims 3 to 5, wherein the packet action unit drops the corresponding packet, or forwards or mirrors the corresponding packet to at least one of a specific VLAN or the plurality of Ethernet communication ports according to a processing result forwarded by the ACL processing unit and the UDF processing unit, and the processing result includes the input packet, whether an ACL condition is satisfied, whether a UDF condition is satisfied, an ACL action field, and a UDF action field.

7. The in-vehicle communication device of any one of claims 4 to 6, wherein the ACL entry table and the UDF entry table include a field containing an activation state and setting information of the UDF condition.

8. The in-vehicle communication device of any one of claims 4 to 7, wherein the Ethernet Packet Processing Engine (EPP) refers to the ACL entry table at an input port, adds a specific value to an input packet containing a specific VLAN ID and transmits the input packet to an output port, and the specific value includes an output port number, a VLAN action, and a tag table number.

9. The in-vehicle communication device of claim 8, wherein the Ethernet Packet Processing Engine (EPP) performs a VLAN tagging operation on the input packet transmitted from the input port for each output port according to the specific value, and the VLAN tagging operation selects one of combinations of TPID (Tag Protocol Identifier) and VID (VLAN Identifier) to add the selected one to the input packet or replace the input packet with the selected one.

10. The in-vehicle communication device of claim 9, wherein the Ethernet Packet Processing Engine (EPP) selects the VLAN ID and the TPID using the tag table number for each output port.

11. The in-vehicle communication device of claim 9 or 10, wherein the Ethernet Packet Processing Engine (EPP) performs both a mirroring operation of the input packet to a predetermined output port and the VLAN tagging operation based on the ACL (Access Control List) entry table and the UDF (User Defined Field) entry table.

12. The in-vehicle communication device of claim 11, wherein when the Ethernet Packet Processing Engine (EPP) performs the mirroring operation on the input packet to the predetermined output port, the Ethernet Packet Processing Engine (EPP) down-samples and mirrors the input packet according to a predetermined interval time or a predetermined number of tokens.

13. The in-vehicle communication device of claim 12, wherein a down-sampling method by the Ethernet Packet Processing Engine (EPP) comprises:
determining whether to apply the mirroring operation to the input packet through ACL entry matching inspection;
calculating an interval time if an ACL entry is interval down-sampling, or calculating a number of tokens if the ACL entry is token down-sampling; and
repeatedly performing mirroring or drop operations according to the interval time or the number of tokens set for each ACL entry to generate a first or second output packet.
